# EUROPEAN PATENT SPECIFICATION

(11) **EP 1 497 934 B1**
(45) Date of publication and mention of the grant of the patent: **16.03.2016**
(21) Application number: 02786211.9
(22) Date of filing: 24.10.2002
(51) Int. Cl.: H04L 12/70, H04W 12/06, H04M 15/00

(54) **AUTHENTICATION SYSTEM AND METHOD HAVING MOBILITY IN PUBLIC WIRELESS LOCAL AREA NETWORK**
AUTHENTISIERUNGSSYSTEM UND VERFAHREN MIT MOBILITÄT IN EINEM ÖFFENTLICHEN DRAHTLOSEN LOKALEN NETZWERK
SYSTEME ET PROCEDE D'AUTHENTIFICATION ASSURANT UNE MOBILITE DANS UN RESEAU LOCAL SANS FIL

(30) Priority: 23.04.2002 KR 2002022346
(43) Date of publication of application: 19.01.2005
(73) Proprietor: SK Telecom Co., Ltd., Jongro-ku, Seoul 110-110 (KR)
(72) Inventor: SHIN, Yong-Sik, SK Telecom Network Research Inst., seoul 100-844 (KR); RYU, Si-Hoon, 9-1 SK Telecom Network Research, Seongnam-si, Gyeonggi-do 463-784 (KR); LEE, Dong-Hahk, 9-1 SK Telecom Network Research, Seongnam-si, Gyeonggi-do 463-784 (KR); BHANG, Chan-Jeom, SK Telecom Network Res. Inst., Seoul 100-844 (KR)
(74) Representative: Isarpatent
(86) International application number: PCT/KR2002/001987
(87) International publication number: WO 2003/092190

(56) References cited:
- EP-A2- 0 851 633
- EP-A2- 1 161 031
- JP-A- 2001 345 819
- KR-A- 2001 090 038
- KR-A- 2002 023 917
- KR-A- 2002 035 530
- US-A- 6 052 785
- US-A1- 2002 035 699
- JUHA ALA-LAURILA ET AL: "Wireless LAN Access Network Architecture for Mobile Operators" IEEE COMMUNICATIONS MAGAZINE, IEEE SERVICE CENTER, PISCATAWAY, US, vol. 39, no. 11, 1 November 2001 (2001-11-01), pages 82-89, XP011091839 ISSN: 0163-6804

## Description

### Technical Field

The present invention relates to authentication of a wireless terminal, and in particular to an authentication system and method having mobility in a public wireless local area network (LAN) which allow a wireless terminal to access an access point of one subnet and receive authentication, and validate authentication and charging even if the wireless terminal moves to an access point of a different subnet.

### Background Art

The 802.11b standard leading a generally-used public wireless LAN does not cover authentication. To authenticate users, the 801.1x has been used. That is, the wireless LAN does not support wide mobility.

In order for a wireless terminal using the wireless LAN to roam between access points, the access points must be added with a roaming function. For this, standardization processes have been performed under the IEEE 802.11f. Some companies support the wireless terminal to roam between the access points by adding an intrinsic function. Here, roaming implies movement between the access points positioned in the identical subnet.

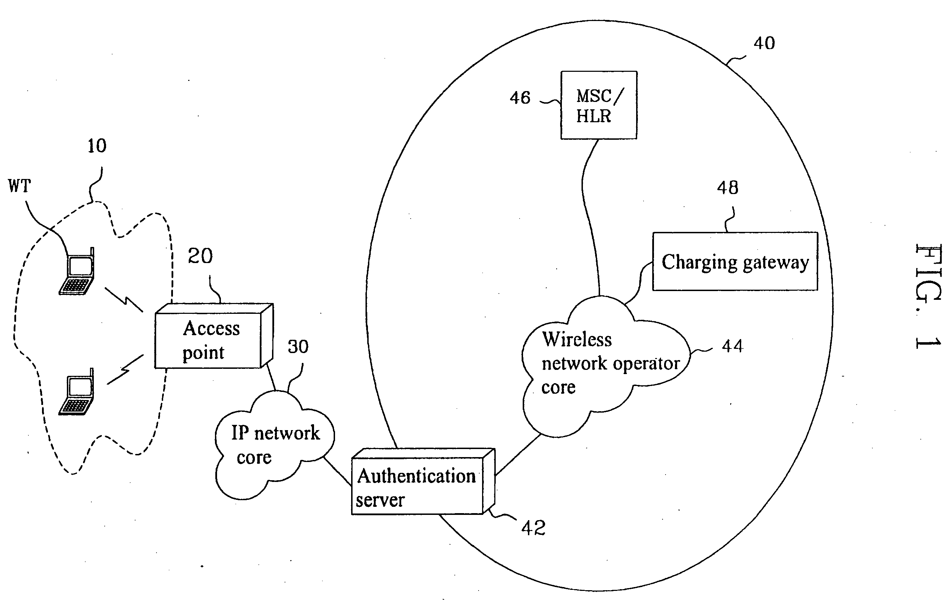

Fig. 1 is a schematic view illustrating a conventional LAN system of a wireless network operator. Reference numeral 10 denotes a network, WT denotes a wireless terminal, 20 denotes an access point, 30 denotes an IP network core, 40 denotes a wireless network, 42 denotes an authentication server, 44 denotes a wireless network operator core, 46 denotes a mobile switching center/home location register (MSC/HLR) and 48 denotes a charging gateway.

The conventional LAN system of the wireless network operator transmits a control signal data to the wireless network operator core 44. The access point 20 routes a user data packet directly to the IP network core 30 to access a public or personal service.

Referring to Fig. 1, the wireless terminal accesses the access point 20 and receives an IP address from the access point 20. The access point 20 transmits an authentication request to the authentication server 42 composing a gateway between an access network and a signal network. The authentication server 42 queries the HLR 46 about the authentication data, and authenticates the user according to the authentication data.

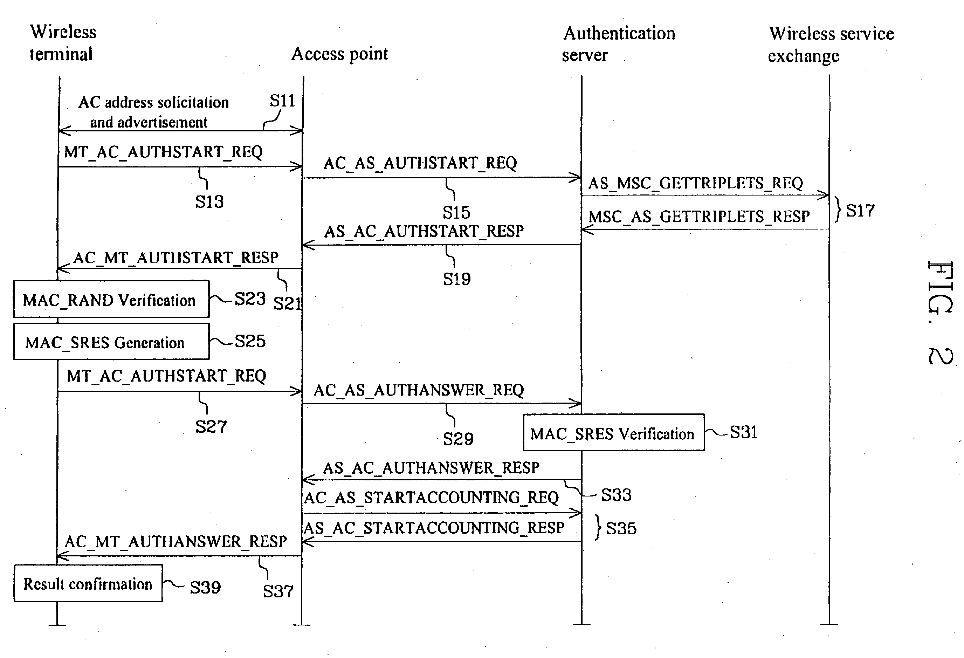

Fig. 2 is a detailed view illustrating an authentication process by the conventional public wireless LAN and the wireless network operator system of Fig. 1.

As shown in Fig. 2, the wireless terminal WT accesses the network 10 through the access point 20 (S11). Thereafter, the wireless terminal WT receives the IP address from the access point 20 and transmits an initial authentication request to the access point 20. The authentication server 42 accesses the MSC/HLR 46 and requests a triplet to the HLR.

Then, the authentication server 42 transmits random number authentication (RAND) to the wireless terminal WT through the access point 20 according to a message authentication code calculated by the RAND (S21).

The message authentication code achieves mutual authentication between the wireless network 40 and the wireless terminal WT. The wireless terminal WT calculates a message authentication code and compares the result with the message authentication code from the network 10 (S23).

When the wireless terminal WT transmits the calculated message authentication code to the access point 20, the access point 20 transmits the response to the authentication server 42 (S27 and S29). The authentication server 42 calculates a message authentication code and verifies the response of the wireless terminal WT (S31). Thereafter, the authentication server 42 transmits an authentication result code to the access point (S33). Here, when the authentication is successful, the access point 20 notifies initiation of a new account session to the authentication server 42 (S35).

Finally, the access point 20 routes a terminal data packet and transmits an acknowledgement signal to the wireless terminal WT (S37).

However, the conventional method always requests re-authentication for roaming. That is, when the wireless terminal moves to a new access point area, the wireless terminal must be authenticated by the new access point. Such re-authentication does not guarantee continuity of data. In addition, the related methods do not include a charging process and thus not satisfy the operators.

US 2002/035699 A1 discloses a gateway server managing connections in a wireless local area network, wherein the gateway server provides context information, such as an IP address, that is stored after being previously located to a mobile device in a previous connection to the WLAN.

The Article JUHA ALA-LAURILA ET AL: "Wireless LAN Access Network Architecture for Mobile Operators", IEEE COMMUNICATIONS MAGAZINE, IEEE SERVICE CENTER, PISCATAWAY, US, vol. 39, no. 11, 1 November 2001, pages 82-89, ISSN 0163-6804 describes a wireless LAN access network architecture for mobile creators.

KR 20010090038 A discloses a WLAN system with a user terminal using Internet services. Each user terminal is assigned with a specific ID. An additional access point manager stores the specific ID together with a user ID and a password transmitted from the user terminal.

### Disclosure of Invention

Accordingly, it is an object of the present invention to provide an authentication system and method having mobility in a public wireless LAN which guarantee mobility of a wireless terminal by authenticating the wireless terminal on the basis of the previously-authenticated registration information, even if the wireless terminal authenticated by one access point moves to another access point of a different subnet.

This is achieved by the features of the independent claims.

### Brief Description of the Drawings

The present invention will become better understood with reference to the accompanying drawings which are given only by way of illustration and thus are not limitative of the present invention, wherein:
Fig. 1 is a schematic view illustrating an access state of a conventional public wireless LAN and wireless network operator system;
Fig. 2 is a detailed view illustrating an authentication process by the conventional public wireless LAN and wireless network operator system of Fig. 1;
Fig. 3 is a structure view illustrating an authentication and charging system by a public wireless LAN and wireless network operator system in accordance with a preferred embodiment of the present invention;
Fig. 4 shows a protocol for processing authentication and charging among a wireless terminal, an access point, an access point manager and an authentication server of Fig. 3;
Fig. 5 shows formats of an authentication request message, an authentication response message and a wireless terminal status message of Fig. 4;
Fig. 6 is a detailed flowchart showing the operation of the access point of Fig. 4; and
Fig. 7 is a detailed flowchart showing the operation of the access point manager of Fig. 4.

### Best mode for Carrying Out the Invention

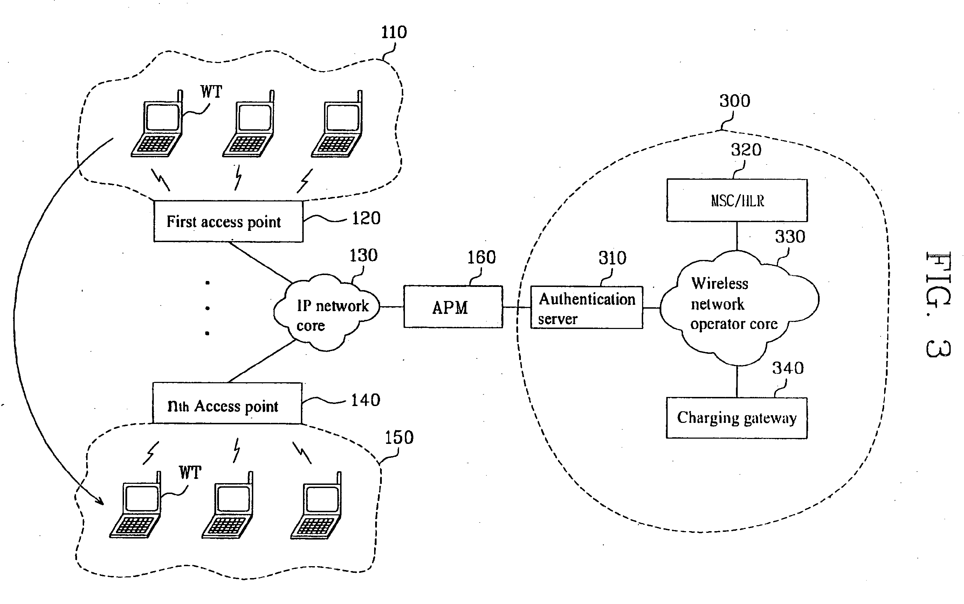

An authentication system and method having mobility in a public wireless LAN in accordance with a preferred embodiment of the present invention will now be described in detail with reference to Figs. 3 to 7.

Fig. 3 is a structure view illustrating the authentication system by the public wireless LAN and wireless network operator system in accordance with the preferred embodiment of the present invention. Reference numerals 120 and 140 denote access points, 130 denotes an IP network core, 160 denotes an access point manager(APM), 310 denotes an authentication server, 320 denotes an MSC/HLR, 330 denotes a wireless network operator core, and 340 denotes a charging gateway. In addition, WT denotes a wireless terminal, MSC is a mobile switching center and HLR is a home location register.

As depicted in Fig. 3, a plurality of access points 120 and 140 access the IP network core 130. Each of the access points 120 and 140 composes a subnet for wirelessly accessing the plurality of wireless terminals WT to the IP network core 130. A necessary number of access points can access the IP network core 130 according to the structure of the operator.

The access point manager 160 access the IP network core 130 to manage authentication and charging of the whole access points 120 and 140 accessing the IP network core 130. In addition, the access point manager 160 accesses the authentication server 310 of the wireless network operator.

Still referring to Fig. 3, reference 300 denotes an area of the wireless network operator. The authentication server 310, the MSC/HLR 320 and the charging gateway 340 access the wireless network operator core 330.

Accordingly, the access point manager 160 requests authentication and charging through the authentication server 310 of the wireless network operator. When receiving an authentication request from the access point manager 160, the authentication server 310 accessing the wireless network operator core 330 processes the authentication request through the MSC/HLR 320, and when receiving a charging request, the authentication server 310 processes the charging request through the charging gateway 340. Thereafter, the authentication server 310 transmits the authentication request or charging request result to the access point manager 160.

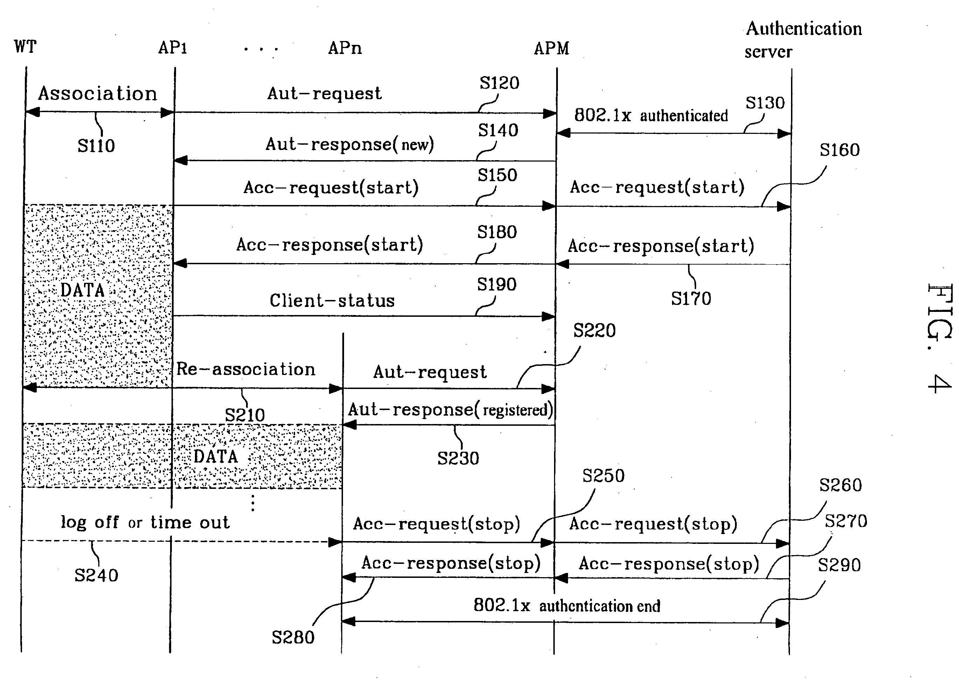

Fig. 4 shows a protocol for processing authentication and charging among the wireless terminal WT, the access point AP, the access point manager APM and the authentication server 310 of Fig. 3. Reference numeral WT denotes the wireless terminal, AP1 denotes the first access point 120, APn denotes the nth access point 140, and APM denotes the access point manager 160.

Fig. 4 shows a message transmission process until the wireless terminal WT associated with the first access point AP1 of the first access point area 110 accesses the nth access point 140 of the nth access point area 150 and ends access to the nth access point 140.

The wireless terminal WT is associated with the first access point AP1. Here, the first access point AP1 transmits an authentication request message Aut-request to the access point manager APM (S120). The authentication request message Aut-request includes user ID and password information. In addition, the authentication request message Aut-request includes the IP address of the access point AP1 currently transmitting the authentication request message.

The access point manager APM authenticates the wireless terminal WT through the authentication server 310 upon the authentication request of the first access point AP1 (S130). The authentication between the access point manager APM and the authentication server 310 can be processed by selectively using for example, MD-5, TLS, SRP and OTP. Accordingly, the wireless terminal is authenticated. The access point manager APM transmits an authentication response message Aut-response to the corresponding access point AP1 (S140). Here, the authentication response message Aut-response includes authentication registration information.

When authentication of the wireless terminal WT is finished, the first access point AP1 enables data transmission and reception of the wireless terminal WT, and transmits a charging start request message Acc-request(start) to the access point manager APM (S150). The access point manager APM transmits the charging start request message Acc-request(start) received from the first access point AP1 to the authentication server 310 to start charging (S160).

When the access point manager APM receives a charging start response message Acc-response(start) from the authentication server 310 (S170), it transmits the charging start response message Acc-response(start) to the first access point AP1. The first access point AP1 transmits information of the authenticated wireless terminal to the access point manager APM through a wireless terminal status message Wireless terminal-status (S190).

Accordingly, the first authentication and charging are started due to association between the wireless terminal WT and the first access point AP1. The process where the wireless terminal WT is associated with the nth access point APn and completes authentication will now be explained in detail.

When the wireless terminal WT moves to the nth access point APn, the wireless terminal WT is re-associated with the nth access point APn (S210). The nth access point APn transmits the authentication request message Aut-request to the access point manager APM (S220). The access point manager APM receiving the authentication request message Aut-request extracts the information of the wireless terminal WT included in the authentication request message Aut-request, and confirms whether the wireless terminal WT has already been authenticated. Since the wireless terminal WT has been authenticated, the access point manager APM does not request authentication to the authentication server 301 but transmits the authentication response message Aut-response to the nth access point APn for authentication (S230). The access point manager APM authenticates the wireless terminal WT when a MAC address and an allocated IP address of the wireless terminal WT included in the received authentication request message Aut-request are identical to a MAC address and an allocated IP address of the wireless terminal WT stored in a management table and when an IP address of the access point is changed.

When receiving the authentication response message Aut-response from the access point manager APM (S230), the nth access point APn enables data transmission and reception of the wireless terminal WT.

When the nth access point APn receives a log off request from the wireless terminal WT during the data transmission or time-out is generated due to interruption of the data transmission (S240), the nth access point APn transmits a charging stop request message Acc-request(stop) to the access point manager APM to stop charging (S250).

The access point manager APM transmits the charging stop request message Acc-request(stop) received from the nth access point APn to the authentication server 310 (S260). Thereafter, when receiving a charging stop response message Acc-response(stop) from the authentication server 310 (S270), the access point manager APM transmits it to the nth access point APn (S280). Therefore, the authentication between the nth access point APn and the authentication server 310 is finished (S290).

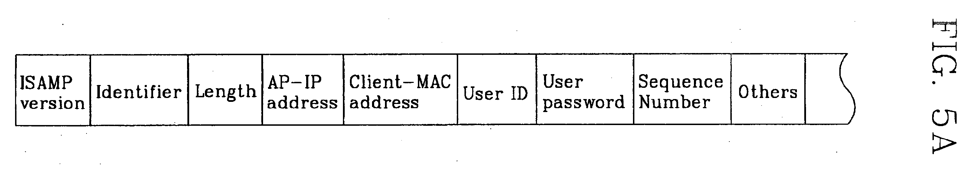

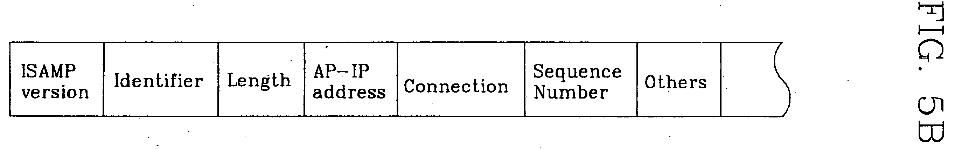

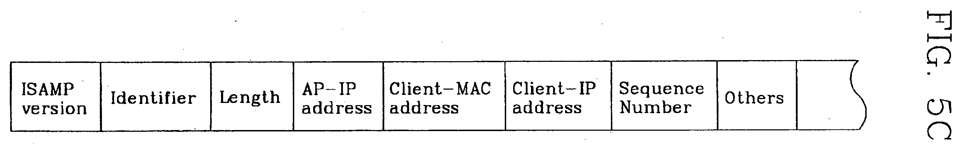

Fig. 5 shows formats of the authentication request message, the authentication response message and the wireless terminal status message of Fig. 4.

Fig. 5a shows a format of the authentication request message.

Here, ISAMP version is a field representing a version of an inter subnet-access point mobile protocol which implies a protocol of the invention, and is composed of for example 1 byte. Identifier is a field representing a message identifier and is composed of for example 2 bytes. Length is a field representing a length of IARP packet and is composed of for example 2 bytes. AP-IP address is a field representing an address of the current access point. Wireless terminal-MAC address includes an address length defined as a field representing a media access control(MAC) address of the currently-associated wireless terminal. User ID is a field representing identification of the user. Sequence Number is a field representing a serial number and is composed of 2 bytes. For instance, Sequential Number has a value from 0 to 2048.

Fig. 5b shows a format of the authentication response message.

Here, ISAMP version is a field representing a version of an inter subnet-access point mobile protocol and is composed of for example 1 byte. Identifier is a field representing a message identifier and is composed of for example 2 bytes. Length is a field representing a length of IARP packet and is composed of for example 2 bytes. AP-IP address is a field representing an address of the current access point. Connection is a field representing identification of authentication registration and is composed of for example 1 byte. Connection respectively displays a state where the wireless terminal firstly requests authentication and a state where the wireless terminal which has already been authenticated and registered requests authentication. For instance, Connection is set up as 00h for the newly-registered wireless terminal and 11h for the previously-registered wireless terminal.

Sequence Number is a field representing a serial number and is composed of 2 bytes. For example, Sequential Number has a value from 0 to 2048.

Fig. 5c shows a format of the wireless terminal status message.

Here, ISAMP version is a field representing a version of an inter subnet-access point mobile protocol and is composed of for example 1 byte. Identifier is a field representing a message identifier and is composed of for example 2 bytes. Length is a field representing a length of IARP packet and is composed of for example 2 bytes. AP-IP address is a field representing an address of the current access point. Wireless terminal-MAC address includes an address length defined as a field representing a media access control address of the currently-associated wireless terminal. Wireless terminal-IP address is a field representing an IP address allocated to the wireless terminal. Sequence Number is a field representing a serial number and is composed of 2 bytes. For instance, Sequential Number has a value from 0 to 2048.

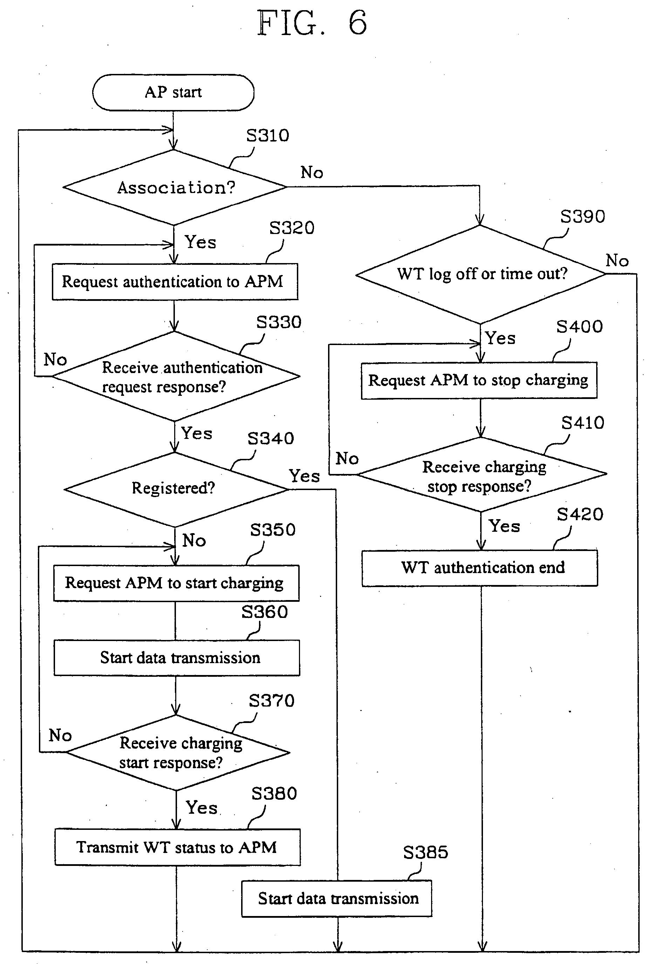

Fig. 6 is a detailed flowchart showing the operation of the access point AP of Fig. 4.

The access point AP is associated with the wireless terminal WT in each area (S310). Then, the access point AP provides the wireless terminal information and the access point information to the access point manager APM to request authentication (S320). Here, the access point AP transmits the information to the access point manager APM through the authentication request message Aut-request.

The access point AP confirms whether the access point manager APM responds to the authentication request (S330). Here, the access point AP receives the authentication information from the access point manager APM through the authentication response message Aut-response.

When the authentication is normally finished, the access point AP analyzes the received authentication response message, and confirms whether the wireless terminal WT has already been registered or is newly registered (S340). For example, when the value of Connection field of the authentication response message Aut-response is 00h, the access point AP decides that the wireless terminal is newly registered, and when the value of Connection field is 11h, the access point AP decides that the wireless terminal has already been registered.

When the wireless terminal is newly registered (00h), the access point AP requests the access point manager APM to start charging (S350). Here, the access point AP transmits information through the charging start request message Acc-request(start). In addition, the access point AP enables data transmission and reception of the wireless terminal WT (S360). When receiving the charging start request response from the access point manager APM (S370), the access point AP transmits the wireless terminal status information to the access point manager APM (S380). The wireless terminal status information is transmitted from the access point AP to the access point manager APM through the wireless terminal status message Wireless terminal-status.

On the other hand, when the access point AP confirms that the wireless terminal WT has already been registered by analyzing the authentication response message Aut-response(11h), the access point AP does not request the access point manager APM to start charging but continuously enables data transmission and reception of the wireless terminal (S385).

In addition, the access point AP confirms whether the log off request is received from the wireless terminal WT or time-out is generated (S390). If so, the access point AP requests the access point manager APM to stop charging (S400). Here, the access point AP transmits the information through the charging stop request message Acc-request(stop). The access point AP receives the charging stop request response message from the access point manager APM (S410). Accordingly, the authentication of the wireless terminal WT between the access point AP and the authentication server 310 is finished(S420).

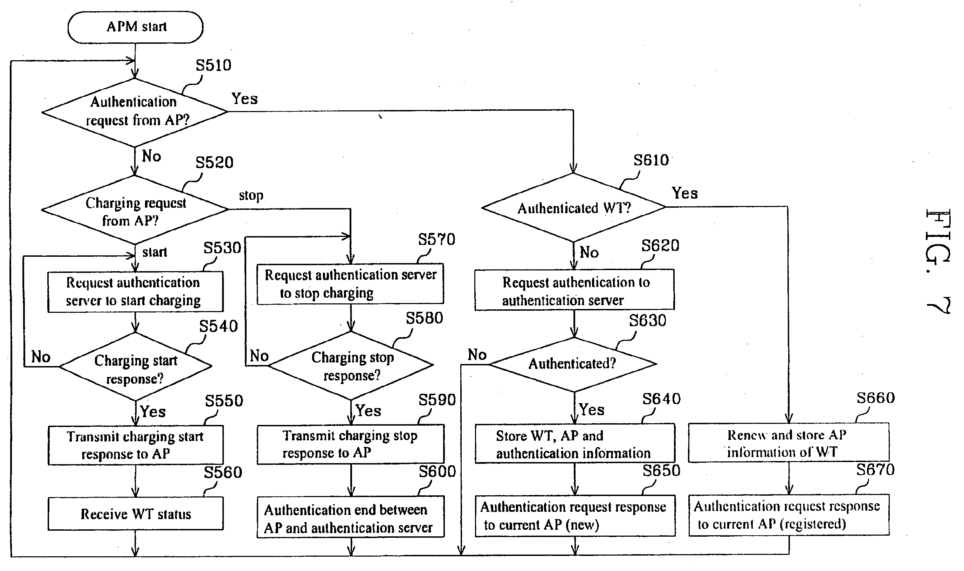

Fig. 7 is a detailed flowchart showing the operation of the access point manager APM of Fig. 4.

The access point manager APM confirms whether the authentication request is received from the access point AP (S510). Here, the access point manager APM receives the authentication request message Aut-request from the access point AP. When receiving the authentication request message Aut-request from the access point AP, the access point manager APM confirms whether the wireless terminal WT has been authenticated by analyzing the authentication request message Aut-request (S610). That is, the access point manager APM confirms whether the wireless terminal WT has been authenticated by referring to the MAC address and IP address of the wireless terminal WT and the IP address of the access point AP included in the received authentication request message Aut-request.

In the case that the wireless terminal WT has not been authenticated, the access point manager APM transmits the authentication request message Aut-request to the authentication server 310 to request authentication (S620). Thereafter, the access point manager APM receives the authentication information from the authentication server 310 (S630). When the authentication is normally processed, the access point manager APM stores the wireless terminal information, access point information and authentication information (S640). The access point manager APM transmits the authentication response message Aut-response to the access point AP which requests authentication (S650). Here, the access point manager APM sets up Connection field of the authentication response message Aut-response as for example, 00h, thereby notifying that the wireless terminal WT is newly authenticated.

When the wireless terminal WT has been authenticated, the access point manager APM does not request authentication to the authentication server 310 but directly authenticates the wireless terminal WT. Here, the access point manager APM renews and stores the IP address of the access point AP included in the authentication request message Aut-request (S660). Thereafter, the access point manager APM transmits the authentication response message Aut-response to the access point AP which requests authentication (S670). Here, the access point manager APM sets up Connection field of the authentication response message Aut-response as for example, 11h, thereby notifying that the wireless terminal WT has already been authenticated.

On the other hand, the access point manager APM confirms whether the charging request signal is received from the access point AP (S520). When receiving the charging start request message Acc-request(start) from the access point AP, the access point manager APM transmits the charging start request message Acc-request(start) to the authentication server 310 to request charging (S530). Thereafter, when receiving the charging start response message Acc-response(start) from the authentication server 310, the access point manager APM transmits the charging start response message Acc-response(start) to the corresponding access point AP (S550). In addition, the access point manager APM receives the wireless terminal status message Wireless terminal-status showing the status of the wireless terminal WT from the access point AP (S560).

When receiving the charging stop request message Acc-request(stop) from the access point AP, the access point manager APM transmits the received charging stop request message Acc-request(stop) to the authentication server 310 to stop charging (S570). Then, when receiving the charging stop response message Acc-response(stop) from the authentication server 310, the access point manager APM transmits the charging stop response message Acc-response(stop) to the corresponding the access point AP (S590). Therefore, the authentication of the wireless terminal WT between the access point AP and the authentication server 310 is finished (S600).

As discussed earlier, in accordance with the present invention, when the wireless terminal moves between the access points of the same subnet as well as different subnet, the access point manager manages the previously-authenticated information and authenticates the wireless terminal in the access point. As a result, the wireless terminal can continuously access the network without re-authentication, thereby achieving mobility and processing charging.

## Claims

1. An authentication system having mobility in a public wireless LAN which processes authentication and charging through an authentication server (310) of a wireless network operator, comprising:
an access point (120; 140) wirelessly connected to a wireless terminal (WT), for outputting an authentication request message or charging request message added with information of the wireless terminal (WT) and requesting authentication and charging of the wireless terminal (WT), and receiving an authentication response message and controlling data transmission and reception of the authenticated wireless terminal (WT); and
an access point manager (160) for receiving the authentication request message for the wireless terminal (WT) from the access point, confirming whether the wireless terminal (WT) has already been authenticated, transmitting the authentication request message to the authentication server of the wireless network operator and transmitting the received authentication response message to the access point (120; 140) when the wireless terminal (WT) has not been authenticated, and transmitting the authentication response message to the access point (120; 140) on the basis of the registered authentication information when the wireless terminal (WT) has been authenticated,
wherein, when the access point manager (160) confirms that the wireless terminal (WT) is newly authenticated, the access point manager (160) adds new authentication information to the authentication response message, and transmits the resultant message to the access point (120; 140),
wherein, when the wireless terminal (WT) has already been authenticated, the access point manager (160) adds previous authentication information to the authentication response message, and transmits the resultant message to the access point (120; 140),
wherein, when the wireless terminal (WT) is newly registered, the access point (120; 140) requests the access point manager (160) to start charging, the access point (120; 140) transmits information through a charging start request, receives a start charging request response from the access point manager (160), and transmits wireless terminal status information to the access point manager (160); and
wherein, when the access point (120; 140) confirms that the wireless terminal (WT) has already been registered, the access point (120; 140) does not request the access point manager (160) to start charging but continuously enables data transmission and reception of the wireless terminal (WT).

2. The system according to claim 1, wherein the access point (120; 140) is adapted to add a MAC address and IP address of the wireless terminal (WT) which needs authentication to the authentication request message and transmits the resultant message.

3. The system according to claim 1, wherein the access point (120; 140) is adapted to add an IP address of the access point (120; 140) which requests authentication to the authentication request message and transmits the resultant message.

4. The system according to claim 1, wherein the access point (120; 140) is adapted to add a user ID and password from the wireless terminal (WT) which needs authentication to the authentication request message and transmits the resultant message.

5. The system according to claim 1, wherein the access point (120; 140) is adapted to confirm whether the wireless terminal (WT) is newly authenticated or has already been authenticated on the basis of the authentication information included in the authentication response message.

6. The system according to claim 1, wherein, when the access point (120; 140) confirms that the wireless terminal (WT) is newly authenticated on the basis of the authentication information included in the authentication response message, the access point (120; 140) is adapted to transmit a charging start request message to the access point manager (160) to start charging the authenticated wireless terminal (WT).

7. The system according to claim 1, wherein, when the access point (120; 140) transmits the charging start request message to start charging the authenticated wireless terminal (WT), the access point (120; 140) is adapted to control data transmission and reception of the authenticated wireless terminal (WT).

8. The system according to claim 1, wherein the access point (120; 140) is adapted to transmit status information of the wireless terminal (WT) to the access point manager (160) after transmitting the charging start request message.

9. The system according to claim 1, wherein, when a logoff request is received from the wireless terminal (WT) or time-out is generated, the access point (120; 140) is adapted to transmit a charging stop request message to the access point manager (160) to stop charging.

10. The system according to claim 1, wherein, when the access point manager (160) receives the authentication request message from the access point (120; 140), the access point manager (160) is adapted to confirm whether the wireless terminal (WT) has already been authenticated.

11. The system according to claim 1, wherein, when the access point manager (160) confirms that the wireless terminal (WT) has not been authenticated on the basis of the authentication request message, the access point manager (160) is adapted to transmit the authentication request message to the authentication server (310) of the wireless network operator for authentication.

12. The system according to claim 1, wherein, when the access point manager (160) receives a charging start request message for the wireless terminal (WT) from the access point (120; 140), the access point manager (160) is adapted to transmit the charging start request message to the authentication server (310) to start charging.

13. The system according to claim 1, wherein, when the access point manager (160) receives a charging stop request message for the wireless terminal (WT) from the access point (120; 140), the access point manager (160) is adapted to transmit the charging stop request message to the authentication server (310) to stop charging.

14. An authentication method having mobility in a public wireless LAN which receives an authentication or charging request message for a wireless terminal (WT) from an access point (120; 140) and processes authentication and charging through an authentication server (310) of a wireless network operator, comprising:
an authentication step for receiving (S510) the authentication request message from the access point (120; 140), authenticating (S610) the wireless terminal (WT) on the basis of the authentication request message, and transmitting (S650; S670) an authentication response message to the corresponding access point (120; 140); and
a charging step for receiving (S520) the charging request message from the access point (120; 140) and transmitting (S530; S570) the received charging request message to the authentication server (310), and receiving (S540; S580) a charging request response message from the authentication server (310) and transmitting (S550; S590) the received charging request response message to the access point (120; 140),
wherein, when the access point manager (160) confirms (S610) that the wireless terminal (WT) is newly authenticated, the access point manager (160) adds new authentication information to the authentication response message, and transmits the resultant message to the access point (120; 140),
wherein, when the wireless terminal (WT) has already been authenticated, the access point manager (160) adds previous authentication information to the authentication response message, and transmits the resultant message to the access point (120; 140);
the method further comprising:
a step (S350) for requesting the access point manager (160) to start charging when the wireless terminal (WT) is newly registered, wherein the step for requesting the access point manager (160) to start charging transmitting information through a charging start request, receiving a start charging request response from the access point manager (160), and transmitting wireless terminal status information to the access point manager (160); and
start data transmission step (S385) for continuously enabling data transmission and reception of the wireless terminal (WT) by the access point (120; 140) without requesting the access point manager (160) to start charging, when the access point (120; 140) confirms that the wireless terminal (WT) has already been registered.

15. The method according to claim 14, wherein the authentication step comprises the steps of:
deciding (S610) whether the wireless terminal (WT) has already been authenticated on the basis of the authentication request message received from the access point (120; 140);
transmitting the authentication response message to the access point (120; 140) on the basis of the previously-registered authentication information, when the wireless terminal (WT) has already been authenticated; and
obtaining authentication from the authentication server (310) and transmitting the authentication response message to the access point (120; 140), when the wireless terminal (WT) has not been authenticated.

16. The method according to claim 15, wherein the step for obtaining authentication from the authentication server (310) and transmitting the authentication response message to the access point (120; 140) comprises a step for registering wireless terminal information, access point (120; 140) information and authentication information.

17. The method according to claim 15, wherein the step for transmitting the authentication response message to the access point (120; 140) on the basis of the previously-registered authentication information comprises a step for renewing (S660) the access point (120; 140) information on the basis of the received authentication request message.

18. The method according to claim 15, wherein the step for transmitting the authentication response message comprises a step for adding information on whether the wireless terminal (WT) is newly authenticated or has already been authenticated to the authentication response message.

## Patentansprüche

1. Authentifizierungssystem, das Mobilität aufweist, in einem öffentlichen Drahtlos-LAN, das Authentifizierung und Gebührenberechnung über einen Authentifizierungsserver (310) eines Drahtlosnetzbetreibers verarbeitet, und das Folgendes umfasst:
einen Zugangspunkt (120; 140), der drahtlos mit einem Drahtlosendgerät (Wireless Terminal, WT) verbunden ist, um eine Authentifizierungsanforderungs-Nachricht oder Gebührenberechnungsanforderungs-Nachricht, der Informationen des Drahtlosendgerätes (WT) hinzugefügt sind, auszugeben und eine Authentifizierung und Gebührenberechnung des Drahtlosendgerätes (WT) anzufordern, und eine Authentifizierungsantwort-Nachricht zu empfangen und Datenübertragung und -empfang des authentifizierten Drahtlosendgerätes (WT) zu steuern; und einen Zugangspunktmanager (160) zum Empfangen der Authentifizierungsanforderungs-Nachricht für das Drahtlosendgerät (WT) von dem Zugangspunkt, Bestätigen, ob das Drahtlosendgerät (WT) bereits authentifiziert wurde, Senden der Authentifizierungsanforderungs-Nachricht an den Authentifizierungsserver des Drahtlosnetzbetreibers und Senden der empfangenen Authentifizierungsantwort-Nachricht an den Zugangspunkt (120; 140), wenn das Drahtlosendgerät (WT) nicht authentifiziert wurde, und Senden der Authentifizierungsantwort-Nachricht an den Zugangspunkt (120; 140) auf der Basis der registrierten Authentifizierungsinformationen, wenn das Drahtlosendgerät (WT) authentifiziert wurde, wobei, wenn der Zugangspunktmanager (160) bestätigt, dass das Drahtlosendgerät (WT) neu authentifiziert ist, der Zugangspunktmanager (160) neue Authentifizierungsinformationen zu der Authentifizierungsantwort-Nachricht hinzufügt und die resultierende Nachricht an den Zugangspunkt (120; 140) sendet,
wobei, wenn das Drahtlosendgerät (WT) bereits authentifiziert wurde, der Zugangspunktmanager (160) frühere Authentifizierungsinformationen zu der Authentifizierungsantwort-Nachricht hinzufügt und die resultierende Nachricht an den Zugangspunkt (120; 140) sendet,
wobei, wenn das Drahtlosendgerät (WT) neu registriert ist, der Zugangspunkt (120; 140) den Zugangspunktmanager (160) auffordert, die Gebührenberechnung zu beginnen, der Zugangspunkt (120; 140) Informationen durch eine Gebührenberechnungsstartanforderung sendet, eine Gebührenberechnungsstartanforderungs-Antwort von dem Zugangspunktmanager (160) empfängt, und Drahtlosendgerätestatus-Informationen an den Zugangspunktmanager (160) sendet; und
wobei, wenn der Zugangspunkt (120; 140) bestätigt, dass das Drahtlosendgerät (WT) bereits registriert wurde, der Zugangspunkt (120; 140) den Zugangspunktmanager (160) nicht auffordert, die Gebührenberechnung zu beginnen, sondern kontinuierlich Datenübertragung und -empfang des Drahtlosendgerätes (WT) ermöglicht.

2. System nach Anspruch 1, wobei der Zugangspunkt (120; 140) dafür ausgelegt ist, eine MAC-Adresse und eine IP-Adresse des Drahtlosendgerätes (WT), die der Authentifizierung bedürfen, zu der Authentifizierungsanforderungs-Nachricht hinzuzufügen, und die resultierende Nachricht sendet.

3. System nach Anspruch 1, wobei der Zugangspunkt (120; 140) dafür ausgelegt ist, eine IP-Adresse des Zugangspunktes (120; 140), die eine Authentifizierung anfordert, zu der Authentifizierungsanforderungs-Nachricht hinzuzufügen, und die resultierende Nachricht sendet.

4. System nach Anspruch 1, wobei der Zugangspunkt (120; 140) dafür ausgelegt ist, eine Nutzer-ID und ein Passwort von dem Drahtlosendgerät (WT), das der Authentifizierung bedarf, zu der Authentifizierungsanforderungs-Nachricht hinzuzufügen, und die resultierende Nachricht sendet.

5. System nach Anspruch 1, wobei der Zugangspunkt (120; 140) dafür ausgelegt ist, auf der Basis der in der Authentifizierungsantwort-Nachricht enthaltenen Authentifizierungsinformationen zu bestätigen, ob das Drahtlosendgerät (WT) neu authentifiziert ist oder bereits authentifiziert wurde.

6. System nach Anspruch 1, wobei, wenn der Zugangspunkt (120; 140) auf der Basis der in der Authentifizierungsantwort-Nachricht enthaltenen Authentifizierungsinformationen bestätigt, dass das Drahtlosendgerät (WT) neu authentifiziert ist, der Zugangspunkt (120; 140) dafür ausgelegt ist, eine Gebührenberechnungsstartanforderungs-Nachricht an den Zugangspunktmanager (160) zu senden, um die Gebührenberechnung des authentifizierten Drahtlosendgerätes (WT) zu beginnen.

7. System nach Anspruch 1, wobei, wenn der Zugangspunkt (120; 140) die Gebührenberechnungsstartanforderungs-Nachricht sendet, um die Gebührenberechnung des authentifizierten Drahtlosendgerätes (WT) zu beginnen, der Zugangspunkt (120; 140) dafür ausgelegt ist, Datenübertragung und -empfang des authentifizierten Drahtlosendgerätes (WT) zu steuern.

8. System nach Anspruch 1, wobei der Zugangspunkt (120; 140) dafür ausgelegt ist, Statusinformationen des Drahtlosendgerätes (WT) an den Zugangspunktmanager (160) zu senden, nachdem die Gebührenberechnungsstartanforderungs-Nachricht gesendet wurde.

9. System nach Anspruch 1, wobei, wenn eine Auslog-Anforderung von dem Drahtlosendgerät (WT) empfangen wird oder ein Timeout generiert wird, der Zugangspunkt (120; 140) dafür ausgelegt ist, eine Gebührenberechnungsstoppanforderungs-Nachricht an den Zugangspunktmanager (160) zu senden, um die Gebührenberechnung zu beenden.

10. System nach Anspruch 1, wobei, wenn der Zugangspunktmanager (160) die Authentifizierungsanforderungs-Nachricht von dem Zugangspunkt (120; 140) empfängt, der Zugangspunktmanager (160) dafür ausgelegt ist zu bestätigen, ob das Drahtlosendgerät (WT) bereits authentifiziert wurde.

11. System nach Anspruch 1, wobei, wenn der Zugangspunktmanager (160) auf der Basis der Authentifizierungsanforderungs-Nachricht bestätigt, dass das Drahtlosendgerät (WT) nicht authentifiziert wurde, der Zugangspunktmanager (160) dafür ausgelegt ist, die Authentifizierungsanforderungs-Nachricht an den Authentifizierungsserver (310) des Drahtlosnetzbetreibers zur Authentifizierung zu senden.

12. System nach Anspruch 1, wobei, wenn der Zugangspunktmanager (160) eine Gebührenberechnungsstartanforderungs-Nachricht für das Drahtlosendgerät (WT) von dem Zugangspunkt (120; 140) empfängt, der Zugangspunktmanager (160) dafür ausgelegt ist, die Gebührenberechnungsstartanforderungs-Nachricht an den Authentifizierungsserver (310) zu senden, um die Gebührenberechnung zu beginnen.

13. System nach Anspruch 1, wobei, wenn der Zugangspunktmanager (160) eine Gebührenberechnungsstoppanforderungs-Nachricht für das Drahtlosendgerät (WT) von dem Zugangspunkt (120; 140) empfängt, der Zugangspunktmanager (160) dafür ausgelegt ist, die Gebührenberechnungsstoppanforderungs-Nachricht an den Authentifizierungsserver (310) zu senden, um die Gebührenberechnung zu beenden.

14. Authentifizierungsverfahren, das Mobilität besitzt, in einem öffentlichen Drahtlos-LAN, das eine Authentifizierungs- oder Gebührenberechnungsanforderungs-Nachricht für ein Drahtlosendgerät (WT) von einem Zugangspunkt (120; 140) empfängt und Authentifizierung und Gebührenberechnung über einen Authentifizierungsserver (310) eines Drahtlosnetzbetreibers verarbeitet, und das Folgendes umfasst:
einen Authentifizierungsschritt zum Empfangen (5510) der Authentifizierungsanforderungsn-Nachricht von dem Zugangspunkt (120; 140), Authentifizieren (S610) des Drahtlosendgerätes (WT) auf der Basis der Authentifizierungsanforderungs-Nachricht, und Senden (5650; 5670) einer Authentifizierungsantwort-Nachricht an den entsprechenden Zugangspunkt (120; 140); und
einen Gebührenberechnungsschritt zum Empfangen (S520) der Gebührenberechnungsanforderungs-Nachricht von dem Zugangspunkt (120; 140) und Senden (5530; S570) der empfangenen Gebührenberechnungsanforderungs-Nachricht an den Authentifizierungsserver (310), und Empfangen (S540; S580) einer Gebührenberechnungsanforderungsantwort-Nachricht von dem Authentifizierungsserver (310) und Senden (5550; S590) der empfangenen Gebührenberechnungsanforderungsantwort-Nachricht an den Zugangspunkt (120; 140),
wobei, wenn der Zugangspunktmanager (160) bestätigt (S610), dass das Drahtlosendgerät (WT) neu authentifiziert ist, der Zugangspunktmanager (160) neue Authentifizierungsinformationen zu der Authentifizierungsantwort-Nachricht hinzufügt, und die resultierende Nachricht an den Zugangspunkt (120; 140) sendet,
wobei, wenn das Drahtlosendgerät (WT) bereits authentifiziert wurde, der Zugangspunktmanager (160) frühere Authentifizierungsinformationen zu der Authentifizierungsantwort-Nachricht hinzufügt, und die resultierende Nachricht an den Zugangspunkt (120; 140) sendet;
wobei das Verfahren des Weiteren Folgendes umfasst:
einen Schritt (S350), um den Zugangspunktmanager (160) aufzufordern, die Gebührenberechnung zu beginnen, wenn das Drahtlosendgerät (WT) neu registriert ist, wobei der Schritt, den Zugangspunktmanager (160) aufzufordern, die Gebührenberechnung zu beginnen, Folgendes umfasst: Senden von Informationen durch eine Gebührenberechnungsstartanforderung, Empfangen einer Gebührenberechnungsstartanforderungs-Antwort von dem Zugangspunktmanager (160), und Senden von Drahtlosendgerätestatus-Informationen an den Zugangspunktmanager (160); und
einen Datenübertragungsstartschritt (S385) zum kontinuierlichen Ermöglichen von Datenübertragung und - empfang des Drahtlosendgerätes (WT) durch den Zugangspunkt (120; 140), ohne den Zugangspunktmanager (160) aufzufordern, die Gebührenberechnung zu beginnen, wenn der Zugangspunkt (120; 140) bestätigt, dass das Drahtlosendgerät (WT) bereits registriert wurde.

15. Verfahren nach Anspruch 14, wobei der Authentifizierungsschritt folgende Schritte umfasst:
Entscheiden (S610), auf der Basis der von dem Zugangspunkt (120; 140) empfangenen Authentifizierungsanforderungs-Nachricht, ob das Drahtlosendgerät (WT) bereits authentifiziert wurde;
Senden der Authentifizierungsantwort-Nachricht an den Zugangspunkt (120; 140) auf der Basis der zuvor registrierten Authentifizierungsinformationen, wenn das Drahtlosendgerät (WT) bereits authentifiziert wurde; und
Erhalten einer Authentifizierung von dem Authentifizierungsserver (310) und Senden der Authentifizierungsantwort-Nachricht an den Zugangspunkt (120; 140), wenn das Drahtlosendgerät (WT) nicht authentifiziert wurde.

16. Verfahren nach Anspruch 15, wobei der Schritt zum Erhalten einer Authentifizierung von dem Authentifizierungsserver (310) und Senden der Authentifizierungsantwort-Nachricht an den Zugangspunkt (120; 140) einen Schritt zum Registrieren von Drahtlosendgerät-Informationen, Zugangspunkt (120; 140)-Informationen und Authentifizierungsinformationen umfasst.

17. Verfahren nach Anspruch 15, wobei der Schritt zum Senden der Authentifizierungsantwort-Nachricht an den Zugangspunkt (120; 140) auf der Basis der zuvor registrierten Authentifizierungsinformationen einen Schritt zum Erneuern (S660) der Zugangspunkt (120; 140)-Informationen auf der Basis der empfangenen Authentifizierungsanforderungs-Nachricht umfasst.

18. Verfahren nach Anspruch 15, wobei der Schritt zum Senden der Authentifizierungsantwort-Nachricht einen Schritt des Hinzufügens, zu der Authentifizierungsantwort-Nachrich, von Informationen darüber umfasst, ob das Drahtlosendgerät (WT) neu authentifiziert ist oder bereits authentifiziert wurde.

## Revendications

1. Système d'authentification assurant une mobilité dans un réseau RLE public sans fil qui traite l'authentification et l'imputation par le biais d'un serveur d'authentification (310) d'un opérateur de réseau sans fil, comprenant :
un point d'accès (120 ; 140) connecté sans fil à un terminal sans fil (WT), destiné à délivrer un message de demande d'authentification ou un message de demande d'imputation, auquel sont ajoutées des informations du terminal sans fil (WT), et à demander une authentification du terminal sans fil (WT) et une imputation à la charge de celui-ci, et à recevoir un message de réponse d'authentification et commander la transmission et la réception de données du terminal sans fil (WT) authentifié ; et
un gestionnaire de point d'accès (160) destiné à recevoir le message de demande d'authentification du terminal sans fil (WT) en provenance du point d'accès, à confirmer si le terminal sans fil (WT) a déjà été authentifié, à transmettre le message de demande d'authentification au serveur d'authentification de l'opérateur de réseau sans fil et à transmettre le message de réponse d'authentification reçu au point d'accès (120 ; 140), lorsque le terminal sans fil (WT) n'a pas été authentifié, et à transmettre le message de réponse d'authentification au point d'accès (120 ; 140) sur la base des informations d'authentification enregistrées, lorsque le terminal sans fil (WT) a été authentifié,
dans lequel, lorsque le gestionnaire de point d'accès (160) confirme que le terminal sans fil (WT) est nouvellement authentifié, le gestionnaire de point d'accès (160) ajoute de nouvelles informations d'authentification au message de réponse d'authentification, et transmet le message résultant au point d'accès (120 ; 140),
dans lequel, lorsque le terminal sans fil (WT) a déjà été authentifié, le gestionnaire de point d'accès (160) ajoute de précédentes informations d'authentification au message de réponse d'authentification, et transmet le message résultant au point d'accès (120 ; 140),
dans lequel, lorsque le terminal sans fil (WT) est nouvellement enregistré, le point d'accès (120 ; 140) demande au gestionnaire de point d'accès (160) de démarrer l'imputation, le point d'accès (120 ; 140) transmet des informations par le biais d'une demande de démarrage d'imputation, reçoit une réponse de demande de démarrage d'imputation en provenance du gestionnaire de point d'accès (160), et transmet des informations d'état du terminal sans fil au gestionnaire de point d'accès (160) ; et
dans lequel, lorsque le point d'accès (120 ; 140) confirme que le terminal sans fil (WT) a déjà été enregistré, le point d'accès (120 ; 140) ne demande pas au gestionnaire de point d'accès (160) de démarrer l'imputation, mais permet en continu la transmission et la réception de données du terminal sans fil (WT).

2. Système selon la revendication 1, dans lequel le point d'accès (120 ; 140) est conçu pour ajouter une adresse MAC et une adresse IP du terminal sans fil (WT) qui nécessite une authentification, au message de demande d'authentification et transmet le message résultant.

3. Système selon la revendication 1, dans lequel le point d'accès (120 ; 140) est conçu pour ajouter une adresse IP du point d'accès (120 ; 140) qui nécessite une authentification, au message de demande d'authentification et transmet le message résultant.

4. Système selon la revendication 1, dans lequel le point d'accès (120 ; 140) est conçu pour ajouter un identificateur d'utilisateur et un mot de passe provenant du terminal sans fil (WT) qui nécessite une authentification, au message de demande d'authentification et transmet le message résultant.

5. Système selon la revendication 1, dans lequel le point d'accès (120 ; 140) est conçu pour confirmer si le terminal sans fil (WT) est nouvellement authentifié ou a déjà été authentifié sur la base des informations d'authentification incluses dans le message de réponse d'authentification.

6. Système selon la revendication 1, dans lequel, lorsque le point d'accès (120 ; 140) confirme que le terminal sans fil (WT) est nouvellement authentifié sur la base des informations d'authentification incluses dans le message de réponse d'authentification, le point d'accès (120 ; 140) est conçu pour transmettre un message de demande de démarrage d'imputation au gestionnaire de point d'accès (160) afin de démarrer l'imputation à la charge du terminal sans fil (WT) authentifié.

7. Système selon la revendication 1, dans lequel, lorsque le point d'accès (120 ; 140) transmet le message de demande de démarrage d'imputation pour démarrer l'imputation à la charge du terminal sans fil (WT) authentifié, le point d'accès (120 ; 140) est conçu pour commander la transmission et la réception de données du terminal sans fil (WT) authentifié.

8. Système selon la revendication 1, dans lequel le point d'accès (120 ; 140) est conçu pour transmettre des informations d'état du terminal sans fil (WT) au gestionnaire de point d'accès (160), après avoir transmis le message de demande de démarrage d'imputation.

9. Système selon la revendication 1, dans lequel, lorsqu'une demande de fermeture de session est reçue en provenance du terminal sans fil (WT) ou qu'un dépassement de temps est engendré, le point d'accès (120 ; 140) est conçu pour transmettre un message de demande d'arrêt d'imputation au gestionnaire de point d'accès (160) afin de mettre fin à l'imputation.

10. Système selon la revendication 1, dans lequel, lorsque le gestionnaire de point d'accès (160) reçoit le message de demande d'authentification en provenance du point d'accès (120 ; 140), le gestionnaire de point d'accès (160) est conçu pour confirmer si le terminal sans fil (WT) a déjà été authentifié.

11. Système selon la revendication 1, dans lequel, lorsque le gestionnaire de point d'accès (160) confirme que le terminal sans fil (WT) n'a pas été authentifié sur la base du message de demande d'authentification, le gestionnaire de point d'accès (160) est conçu pour transmettre le message de demande d'authentification au serveur d'authentification (310) de l'opérateur de réseau sans fil à des fins d'authentification.

12. Système selon la revendication 1, dans lequel, lorsque le gestionnaire de point d'accès (160) reçoit un message de demande de démarrage d'imputation pour le terminal sans fil (WT), en provenance du point d'accès (120 ; 140), le gestionnaire de point d'accès (160) est conçu pour transmettre le message de demande de démarrage d'imputation au serveur d'authentification (310) afin de démarrer l'imputation.

13. Système selon la revendication 1, dans lequel, lorsque le gestionnaire de point d'accès (160) reçoit un message de demande d'arrêt d'imputation pour le terminal sans fil (WT), en provenance du point d'accès (120 ; 140), le gestionnaire de point d'accès (160) est conçu pour transmettre le message de demande d'arrêt d'imputation au serveur d'authentification (310) afin de mettre fin l'imputation.

14. Procédé d'authentification assurant une mobilité dans un réseau RLE public sans fil qui reçoit un message de demande d'authentification ou d'imputation pour un terminal sans fil (WT), en provenance d'un point d'accès (120 ; 140) et traite l'authentification et l'imputation par le biais d'un serveur d'authentification (310) d'un opérateur de réseau sans fil, comprenant :
une étape d'authentification consistant à recevoir (S510) le message de demande d'authentification en provenance du point d'accès (120 ; 140), à authentifier (S610) le terminal sans fil (WT) sur la base du message de demande d'authentification, et à transmettre (S650 ; S670) un message de réponse d'authentification au point d'accès (120 ; 140) correspondant ; et
une étape d'imputation consistant à recevoir (S520) le message de demande d'imputation en provenance du point d'accès (120 ; 140) et transmettre (S530 ; S570) le message de demande d'imputation reçu au serveur d'authentification (310), et à recevoir (S540 ; S580) un message de réponse de demande d'imputation en provenance du serveur d'authentification (310) et transmettre (S550 ; S590) le message de réponse de demande d'imputation reçu au point d'accès (120 ; 140), dans lequel, lorsque le gestionnaire de point d'accès (160) confirme (S610) que le terminal sans fil (WT) est nouvellement authentifié, le gestionnaire de point d'accès (160) ajoute de nouvelles informations d'authentification au message de réponse d'authentification, et transmet le message résultant au point d'accès (120 ; 140),
dans lequel, lorsque le terminal sans fil (WT) a déjà été authentifié, le gestionnaire de point d'accès (160) ajoute de précédentes informations d'authentification au message de réponse d'authentification, et transmet le message résultant au point d'accès (120 ; 140) ;
le procédé comprenant en outre :
une étape (S350) consistant à demander au gestionnaire de point d'accès (160) de démarrer l'imputation, lorsque le terminal sans fil (WT) est nouvellement enregistré, dans lequel l'étape consistant à demander au gestionnaire de point d'accès (160) de démarrer l'imputation comprend la transmission d'informations par le biais d'une demande de démarrage d'imputation, la réception d'une réponse de demande de démarrage d'imputation en provenance du gestionnaire de point d'accès (160), et la tranmission d'informations d'état du terminal sans fil au gestionnaire de point d'accès (160) ; et
une étape de démarrage de transmission de données (S385) consistant à permettre en continu la transmission et la réception de données du terminal sans fil (WT) par le point d'accès (120 ; 140) sans demander au gestionnaire de point d'accès (160) de démarrer l'imputation, lorsque le point d'accès (120 ; 140) confirme que le terminal sans fil (WT) a déjà été enregistré.

15. Procédé selon la revendication 14, dans lequel l'étape d'authentification comprend les étapes consistant à :
décider (S610) si le terminal sans fil (WT) a déjà été authentifié sur la base du message de demande d'authentification reçu en provenance du point d'accès (120 ; 140) ;
transmettre le message de réponse d'authentification au point d'accès (120 ; 140) sur la base des informations d'authentification précédemment enregistrées, lorsque le terminal sans fil (WT) a déjà été authentifié ; et
obtenir une authentification auprès du serveur d'authentification (310) et transmettre le message de réponse d'authentification au point d'accès (120 ; 140), lorsque le terminal sans fil (WT) n'a pas été authentifié.

16. Procédé selon la revendication 15, dans lequel l'étape d'obtention d'une authentification auprès du serveur d'authentification (310), et de transmission du message de réponse d'authentification au point d'accès (120 ; 140) comprend une étape consistant à enregistrer des informations de terminal sans fil, des informations de point d'accès (120 ; 140) et des informations d'authentification.

17. Procédé selon la revendication 15, dans lequel l'étape de transmission du message de réponse d'authentification au point d'accès (120 ; 140) sur la base des informations d'authentification précédemment enregistrées comprend une étape consistant à renouveler (S660) les informations de point d'accès (120 ; 140) sur la base du message de demande d'authentification reçu.

18. Procédé selon la revendication 15, dans lequel l'étape de transmission du message de réponse d'authentification comprend une étape consistant à ajouter des informations sur le fait que le terminal sans fil (WT) est nouvellement authentifié ou a déjà été authentifié, au message de réponse d'authentification.
